# EUROPEAN PATENT APPLICATION

(11) **EP 2 014 983 A1**
(43) Date of publication of application: **14.01.2009**
(21) Application number: 07013486.1
(22) Date of filing: 10.07.2007
(51) Int. Cl.: F23J 1/02, F23J 1/08, C03B 19/10

(54) **System for treating a melted residue of a combustor or reactor**

(71) Applicant: WATERIM LTD, London W1U 2AB (GB)
(72) Inventor: Stock, Gerda, 79115 Freiburg im Breisgau (DE)
(74) Representative: Zardi, Marco

(57) **Abstract**

System for the treatment of a melted residue (F) from a reactor (1), said system comprising a reservoir (3) containing primary cooling water for cooling and solidification, by direct contact, of said residue, wherein said reservoir is provided with a double wall (20, 25) defining an interspace (26) for circulation of a cooling fluid.

## Description

### Field of the invention

The invention relates, in its most general aspect, to the technical field of the treatment of a melted residue from a reactor. In particular, the invention relates to a system or apparatus of treatment of melted waste material discharged from a reactor, said system comprising a reservoir which receives the melted waste material and which contains a mass of water for cooling and solidifying said waste material by direct contact.

In the present description, the term reactor is used with general reference to a chemical reactor, a reactor for gasification or a combustor. The invention is particularly applicable in the field of reactors for gasification of waste and/or biomass, to which particular reference will be made in the following.

### Prior art

The prior art comprises plants for the utilization of waste and/or biomass by a gasification process, which essentially consists of a partial combustion of said waste and/or biomass inside a reactor, with a gasifying agent adapted to furnish oxygen, e.g. air, steam, pure oxygen.

Said plants are fed for example with refuse-derived fuel, fluff, plastics, rubber, used tires, etc. or with biomass such as carcass meal, sawdust, cortex, waste wood, etc., producing a synthesis fuel gas that can be used in high-efficiency cycles such as thermal engines or gas turbines with heat recovery steam generator and steam cycle with turbine-generator group, and fuel cells.

Said plants need to dispose a considerable amount of melted waste material, in a liquid form, which is the combustion residue (also known as slag) and which progressively accumulates on bottom of the reactor.

According to known technique, this melted residue is directly poured in a basin or reservoir connected to the reactor, containing a mass of cooling water which is herein called primary water. The melted residue is cooled and solidified by direct contact with said primary water, producing a solid waste in the form of granules of variable dimensions, which is then extracted with a cup-conveyor, a ribbon conveyor or other known systems.

This technique is rather simple from the point of view of the plant and is widely used, but has some drawbacks.

The main problem is the difficulty to control the working temperature of the primary water, and thus the solidification temperature of the waste material. In fact, the water is subjected to a strong thermal input from the hot melted mass, but the temperature of the water should remain in a certain range, to allow the correct cooling of the waste material continuously flowing from the reactor.

The primary water, to this purpose, can be re-circulated through a suitable cooling system, but considerable technical problems arise, as the water is in direct contact with the combustion products and has a very high content of impurities and abrasive particles, being extremely aggressive to pipes, valves, seals.

In practice, the temperature of the primary water cannot be kept under control unless complicated solutions are used, which penalize the economical performance of the whole process.

It should be noted that plants for gasification of waste and/or biomass are advantageous from many points of view, and are a promising resource for the future, but they bear the cost of a complex section for the treatment of the gas (ash removal, etc...) and fumes. Moreover, the heat value of the produced synthesis gas is good and economically interesting, but inferior e.g. to methane. It can be understood that further costs for treatment and granulation of the melted residue of combustion, as well as costs for slag removing, transport and disposal must be kept at a reasonable level, to avoid that such costs are an obstacle to the diffusion of these plants.

Another factor is the potentially high environmental impact of granules and dust obtained from the solidification of the waste material. An effective process of granulation/solidification, and a good separation between dust and granules of greater dimensions, allow to better handle this waste at a low cost and low environmental impact.

For these reasons, there is the need of a treatment/ granulation section which is simple from the point of view of the plant, but effective in controlling the process and especially the working temperature, for obtaining a homogeneous solid residue, which can be transported and handled with conventional means at low costs.

The known art does not give an effective solution to the aforesaid problem.

### Summary of the invention

The technical problem underlying the invention is to find and provide a system for the treatment of melted waste material from a reactor, particularly in the field of waste and/or biomass gasification plants, which allows to control the process of solidification and granulation of said melted waste material, with particular reference to the temperature of solidification. An aspect of the problem, as stated above, is the use of economically feasible means, mainly for the application to waste and/or biomass gasification units.

The problem is solved, according to the invention, by a system of treatment of a melted waste material from a reactor, said system comprising a reservoir disposed to receive said melted material from said reactor, and adapted to contain a mass of primary water for cooling and solidification, by direct contact, of said melted material, characterized in that said reservoir is provided, on at least part of its axial extension, of a double wall defining an interspace for circulation of a cooling fluid, adapted to indirectly exchange heat with said primary water.

With the term of indirectly exchange heat, it is intended that said chamber is not in fluid communication with the inside of the reservoir, i.e. the cooling fluid is not in contact and cannot mix with the primary water.

Preferably, the reservoir has an internal agitator, which gives the water a turbulent motion and enhance the heat exchange coefficient on the walls of the reservoir.

In a preferred form, the reservoir of the primary water is disposed with vertical axis, and has substantially a central cylindrical portion, a top portion ending with an inlet opening for the melted material, and a bottom portion ending with a discharge opening of the solidified residue (dust and granules). In said preferred form, the double wall with interspace for the cooling fluid extends substantially in correspondence of the central cylindrical portion of the reservoir.

According to another aspect of the invention, a cast-breaking device is associated to the reservoir, in correspondence of the top portion and near the inlet opening for the melted material, to avoid formation of a "queue" of melted material inside the reservoir. Preferably, said cast-breaking device is substantially a motorized ring rotating around a diameter axis, perpendicular to the axis of the reservoir.

A preferred form provides a distributor connecting the reactor to the reservoir of primary water, realized e.g. with a cylindrical shell defining a channel and a weir adducing the melted waste material from the bottom of the reactor to the inlet of the reservoir. Preferably, there is an additional burner with function of oxygen lance associated to said distributor and positioned substantially over said weir, to liquefy possible more dense regions of the melted waste material.

According to another aspect of the invention, the discharge opening of the cooling reservoir is connected to a section for removal of solids, comprising means to separate granules from fine parts, formed by the cooling of the waste material in direct contact with the primary water. Between the discharge opening of the reservoir and said section for removal of solids, there can be an optional grinder to guarantee the required dimensions of granules.

More in detail, and according to a preferred form, the section for removal and transport of solids comprises a slag poker with an extractable drawer and a valve for extracting said drawer; downstream there is a chain transport system for the finest parts, through a chain system which drives a plurality of dust-carrying plates in a closed circuit.

In a further aspect of the invention, said system has a discharge point at a position higher than the level of primary water inside the reservoir, thus obtaining a hydraulic guard and avoiding gas or water leaks through the transport system itself, even in the case of overpressure of the reactor.

An object of the invention is also a plant for exploitation of waste and/or biomass, comprising a reactor for gasification where said waste and/or biomass are subjected to gasification obtaining a flow of synthesis gas and a melted waste material, characterized by a system for treating said melted waste material as described above.

The main advantage of the invention is a better control of the cooling process of the melted waste material.

In greater detail, the heat exchange between the primary water and the fluid circulating inside the chamber keep the working temperature of the primary water substantially constant, i.e. in a predetermined range. This is further improved by the optional agitator of the reservoir, and corresponding enhancement of the heat exchange coefficient on the walls of the same.

Thank to the invention, it is not necessary to cool directly the primary water which, as stated above, is very dirty and difficult to treat in a conventional heat-exchange system.

The better control of the solidification temperature allows to obtain more homogeneous granules. This result is still improved by the provision of the cast-breaking device and the additional oxygen burner/lance, according to preferred embodiments.

Moreover, the invention makes easier to separate granules of solid waste material from the smaller parts (dust). The extractable drawer under the discharge section of the reservoir, in particular, allows to take away the granules of bigger dimensions, separating them from finest parts which, then, are sent to the transport system.

The system is fully closed and cooling vapors remain inside the reactor. The transport system with hydraulic guard on the discharge, in a preferred embodiment, avoids escape of primary water and contamination of the environment by pollutants contained in the waste material.

The features of the invention will be more evident with the help of the following detailed description of a preferred embodiment, with reference to the drawings of non-limiting examples.

### Brief description of drawings

Fig. 1 is a simplified scheme of a plant for treatment of a melted waste material, according to one embodiment the invention;
Fig. 2 is a 3-D sketch of a portion of the plant of Fig. 1;
Figs. 3 and 4 are details of the plant of Fig. 1;
Fig. 5 is a scheme of an alternative embodiment of the invention, compared to that of Fig 1.

### Detailed description of a preferred embodiment

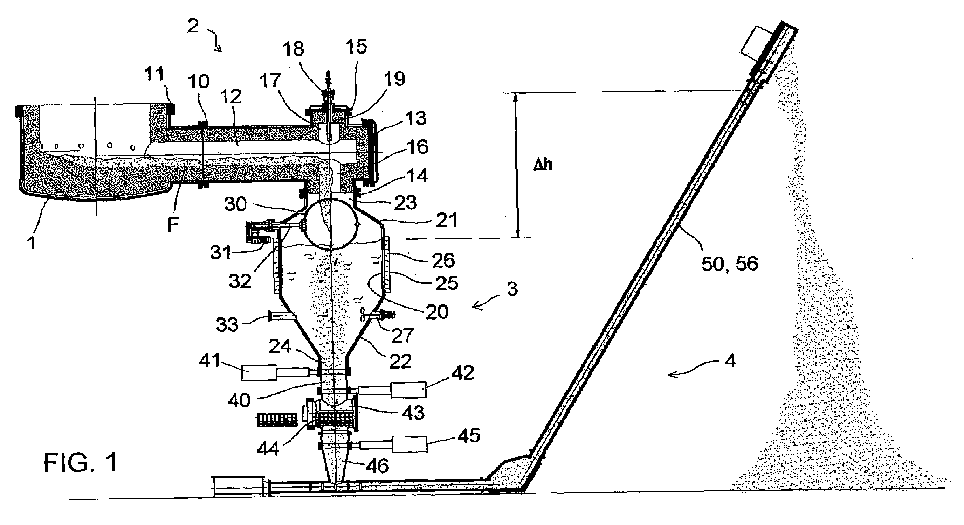

Referring to Fig. 1, there is shown a scheme of a system or apparatus for treatment of a melted waste material F, discharged from a reactor 1, whose bottom part is illustrated.

Said reactor 1, in a non-limiting example, is a reactor for gasification of solid waste, RDF or biomass.

In essential terms, the plant comprises a distributor 2, connecting the reactor 1 to a reservoir 3 with vertical axis, disposed at a lower height than reactor 1, to receive the material F by gravity. Reservoir 3 contains a mass of cooling water for cooling said material F, or primary water, to be in direct contact with the material F. Downstream the reservoir 3, there is a system 4 for transporting the granules so obtained.

More in detail, said distributor 2 is made essentially by a cylindrical shell 10 connected to a lateral discharge slot of the reactor 1, by a flange 11. Inside the shell 10, with suitable insulation, a duct 12 is defined, receiving the melted material F from said discharge slot of the reactor 1.

The distributor 2 ends substantially with a T-portion, having a front closing flange 13, a lower flange 14 where reservoir 3 is connected, and an upper closing flange 15. Respectively, the internal pipe 12 has a Tend with a weir 16 open through the flange 14, and a short channel 17 aligned with the weir 16 and closed by the upper flange 15. A burner 18 is fitted on said flange 15, which will be described in greater detail

The reservoir 3 has essentially a central portion defined by a cylindrical shell 20, and top and bottom portions respectively defined by frusto-conical shells 21 and 22, ending with an inlet opening 23 and a discharge opening 24.

The inlet opening 23 is connected, through the flange 14, to the distributor 2, and receives the melted waste material F from the fall 16.

The central portion of the reservoir 3 is double-walled, having an external wall 25 coaxial to shell 20. An interspace or chamber 26 is then defined between the shell 20 and external wall 25. Said chamber 26 contains a secondary cooling fluid, preferably water, to take away the heat from the solidification of the melted material F, with the purpose of maintaining the working temperature of the primary water in a predetermined range.

It must be noted that the heat exchange between the primary water and secondary water (or other fluid) in the chamber 26 is indirect, by heat conduction through the shell 20, the chamber 26 not being in fluid communication with the inside of the reservoir 3. The chamber 26 is connected to a conventional secondary cooling circuit, not shown. For instance, said circuit may comprise an air cooler or a cooling tower.

The reservoir 3 is equipped with an agitator 27, providing a turbulent motion of the primary water, and enhancing the heat exchange coefficient with the shell 20.

Preferably, as shown, the chamber 26 extends substantially over the whole cylindrical portion of the reservoir 3, i.e. the wall 25 is coaxial to the cylindrical shell 20 substantially for all or the major part of its height. Other embodiments, however, are possible, for example with a chamber 26 more or less extended, taking into account factors such as temperatures, heat to dissipate, etc... which are known to the skilled person.

Near the inlet opening 23, there is a cast-breaking device, which in the example is a ring 30 operated by a gear-motor 31 through a shaft 32. The ring 30, in operation, rotates around its horizontal diameter axis, powered by said shaft 32, breaking the cast of material F and avoiding the formation of a "plume" from the fall 16 to the level of cooling primary water inside the reservoir 3.

The burner 18, fitted on the flange 15, is preferably a supersonic burner with a convergent-divergent duct 19 in communication with the channel 17. Said burner 18 has the purpose of liquefying the material F near the inlet of the fall 16, avoiding local thickening of the same. More in detail, said burner 18 can operate both as a stoichiometric-balanced burner, or as oxygen lance, furnishing an extra 02 flow at a supersonic speed towards the weir 16. The extra 02 guarantees a total combustion in the region over the weir 16, maintaining the melted mass at a high temperature and thus in a fluid state.

A re-integration 33 of primary water is provided, to compensate for the water evaporated and/or absorbed by granules of solidified material F.

The discharge opening 24 is connected to a discharge duct 40, when there are provided two valves 41, 42; a poker 43 with extractable drawer 44 and a further valve 45. Downstream said further valve 45 there is a discharge box 46 feeding the fine solid granules to the transport system 4 (Figs. 1, 2 and 3).

The poker 43 collects the granules of bigger dimensions formed in the reservoir 3, i.e. the so-called big parts. Valves 41, 42 and 45 are known per se, being for example on-off valves with pneumatic actuator, and allow to isolate the poker 43 from the rest of the plant, for extracting the drawer 44 and discharge the granules. Said drawer 44, for collecting the bigger granules, is advantageously equipped with a vibrator, so that filamentary parts of the granulated material do not deposit between the mesh of the bucket and the collected granules. Optionally, there can also be a grinder (not shown).

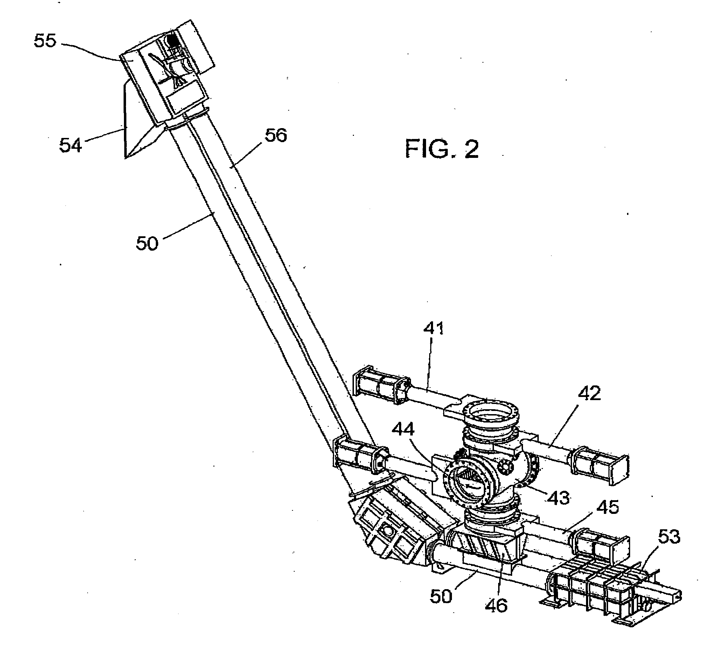

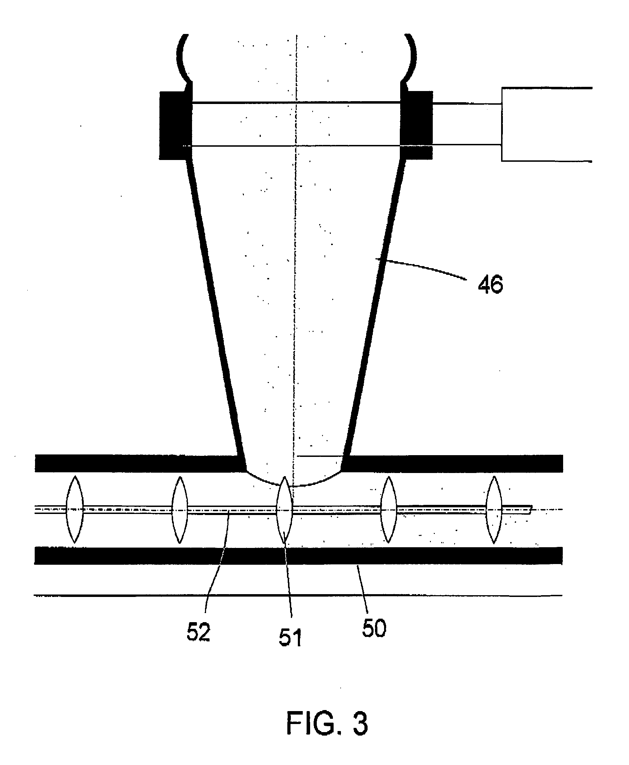

Referring in particular to Fig. 3, the discharge box 46 conveys the material inside a duct 50, where there is provided a transport system by plates 51 operated by a chain 52. Said chain 52 is driven, for example by means of a pulley, by a gearmotor unit housed in a compartment 53 (Fig. 2).

The duct 50 ends with a discharge aperture 54, connected to a compartment 55 which in turn is connected to said duct 50 and to a parallel return duct 56. The chain 52 is transported in the circuit formed by ducts 50 and 56, making a 180° turn in the compartments 53 (where the motor is also housed) and 55.

Preferably, as shown, the duct 50 has an inclined portion with a suitable length, so that the discharge aperture 54 is higher than the level of primary water in the reservoir 3 (Fig. 1). A hydraulic guard corresponding to the difference Δh of Fig. 1 is thus obtained, avoiding the exit of primary water or synthesis gas, even in the event of some overpressure inside the reactor 1. This is useful especially in gasification plants, where the internal pressure is slightly over the atmospheric value.

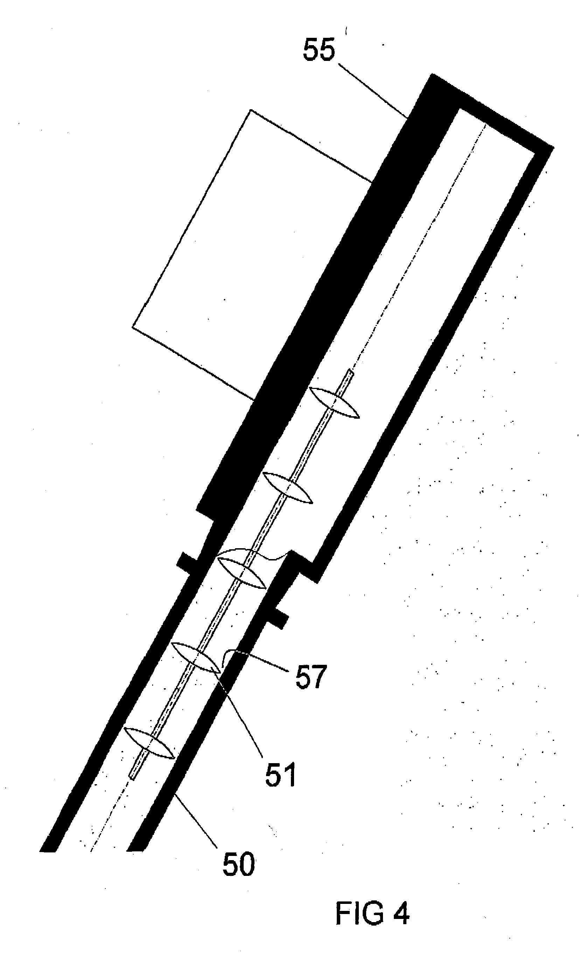

To avoid that primary water exits from said discharge opening 54, there is a clearance 57 between the circumferential edge of plates 51 and the internal wall of duct 50, so that the carried granules, in the last portion of duct 50, are separated from the water before they are discharged through opening 54 (Fig. 4).

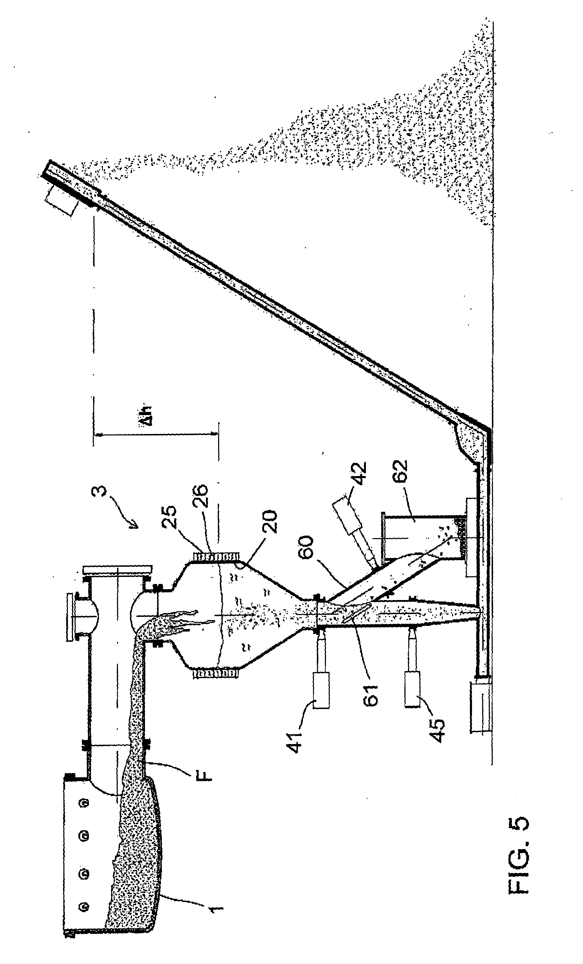

A different embodiment is shown in Fig. 5. Details common to Fig. 1 are shown with the same numerals, and are not described. The big parts are separated by an Y-fitting 60, downstream the discharge opening of the reservoir 3. A deviator 61 addresses the falling granulated material towards the side part of said Y fitting, connected to a collecting tank 62.

As stated above, valves 41, 42 and 45 allow to isolate this portion of the plant from reservoir 3, in particular for emptying the tank 62.

## Claims

1. System for treatment of a melted waste material (F) from a reactor (1), said system comprising a reservoir (3) disposed to receive said melted waste material (F) from said reactor (1), and adapted to contain a mass of primary water for cooling and solidification, by direct contact, of said melted material (F), **characterized in that** said reservoir (3) is provided, on at least part of its axial extension, with a double wall (20, 25) defining an interspace (26) for circulation of a cooling fluid, adapted to indirectly exchange heat with said primary water.

2. System according to claim 1, wherein said reservoir (3) is disposed with vertical axis, and has a central cylindrical portion, a top portion ending with an inlet opening (23) for the melted material, and a bottom frusto-conical portion ending with a discharge opening (24) of solidified material, and said double wall (20, 25) with interspace (26) extends substantially in correspondence of said central cylindrical portion of the reservoir.

3. System according to claim 1 or 2 wherein said interpsace (26) is connected to a circuit, external to the reservoir (3), for cooling the fluid circulating therein.

4. System according to any one of preceding claims, wherein the cooling fluid circulating in said interspace (26) is water.

5. System according to any one of preceding claims, wherein the resevoir (3) has an agitator (27) for the primary water.

6. System according to any one of preceding claims, wherein there is a cast-breaking device (30) associated to the reservoir (3) of cooling primary water, and positioned near the inlet opening (23) of said reservoir (3), to avoid formation of a queue of melted material inside the reservoir (3).

7. System according to claim 6, wherein said cast-breaking device comprises a motorized ring (30) rotating around a rotation axis, perpendicular to the axis of the reservoir.

8. System according to any one of preceding claims, **characterized by** comprising a distributor (2) for connecting the reactor (1) to the cooling reservoir (3) wherein said distributor (2) defines a channel (12) and a weir (16) feeding the melted material from bottom of the reactor (1) to inlet opening (23) of said reservoir (3).

9. System according to claim 8, **characterized by** comprising an additional burner (18) associated to said distributor (2) and positioned substantially over said weir (16) adducing the melted material to the reservoir (3).

10. System according to claim 9, **characterized in that** said additional burner (18) is a supersonic burner, having the function of burner and/or oxygen lance.

11. System according to any one of preceding claims, **characterized by** comprising, downstream said cooling reservoir (3), means (43; 61, 62) adapted to separate the granules of bigger dimensions from the finest parts formed in said reservoir (3) due to solidification of the melted waste material (F).

12. System according to claim 11, wherein said means for separating the granules from finest parts comprise a poker (43) equipped with a extractable drawer (44) mounted under the discharge opening (24) of the reservoir (3) .

13. System according to claim 11 or 12, **characterized by** a system (4) for chain transportation of fine parts formed inside the cooling reservoir (3), wherein said transport system (4) is downstream said means for separating the granules from finest parts, and comprises a plurality of plates (52) driven by a chain (52) inside a closed circuit essentially defined by a first duct (50) and a return duct (56).

14. System according to claim 13, wherein said system (4) for chain transportation comprises a discharge aperture (54) at a position higher than the level of primary water inside the reservoir (3), for creating a hydraulic guard avoiding gas or water leak from said reservoir (3) through the transport system itself.

15. A plant for utilization of waste and/or biomass, comprising a gasification reactor where said waste and/or biomass are subjected to gasification obtaining a flow of synthesis gas and a melted waste material, **characterized by** a system for treating said melted waste material according to any one of preceding claims.
